# EUROPEAN PATENT SPECIFICATION

(11) **EP 3 800 386 B1**
(45) Date of publication and mention of the grant of the patent: **17.01.2024**
(21) Application number: 19797133.6
(22) Date of filing: 29.04.2019
(51) Int. Cl.: F16K 31/50, F16K 31/53, F16H 37/02, F16K 5/06, F16K 5/20

(54) **PLANETARY ROLLER THREADED DEVICE CAPABLE OF BEING RESTORED BY MEANS OF HOLDER**
MITTELS HALTER WIEDERHERGESTELLTE PLANETENWALZENGEWINDEVORRICHTUNG
DISPOSITIF FILETÉ À ROULEAUX PLANÉTAIRES POUVANT ÊTRE RÉTABLI AU MOYEN D'UN SUPPORT

(30) Priority: 03.05.2018 CN 201810412883
(43) Date of publication of application: 07.04.2021
(73) Proprietor: Zibo Votaisi Petrochemical Equipment Co., Ltd, High-Tech Zone Zibo Shandong 255020 (CN)
(72) Inventor: CHEN, Jimeng, Zibo City, Shandong 255120 (CN); LIU, Xiaoqi, Beijing 100125 (CN); LIU, Xiaoxuan, Beijing 100125 (CN)
(74) Representative: Bewley, Ewan Stuart
(86) International application number: PCT/CN2019/084917
(87) International publication number: WO 2019/210824

(56) References cited:
- WO-A1-2016/062357
- CN-A- 105 899 862
- CN-A- 106 763 603
- CN-A- 107 327 621
- CN-A- 107 606 224
- CN-A- 107 606 224
- CN-A- 107 725 819
- CN-A- 107 763 240
- CN-A- 107 763 240
- CN-A- 108 518 500
- CN-U- 204 114 216
- CN-U- 207 246 470

## Description

### Technical field

The present disclosure pertains to a screw driven device, and more particularly to a cage reset planetary roller screw device.

### Background of Techniques

In the field of fluid control, oil and gas production process switching, pipeline shutoff, metering, pressure regulation, molecular sieve switching, compressor inlet and outlet, hydrogen application in refinery processes, air separation of ammonia plant, etc. all require frequent operations and rigorous control over fluid switching and require the absolute tightness of closure. In these applications, the valve is required to produce as small a pressure drop as possible in a through-conduit port and to provide a forced torque seal that is unaffected by the line pressure. Forced seal ball valves are recognized as the ideal solution. One of the related technologies uses a screw-driven forced seal ball valve to achieve a mechanically energized seal between the ball and the valve end-connection by a screw jacking method. However, when applied to a large-diameter high-pressure pipe, the ball is subjected to a high pressure, and a large frictional force is generated at the contact surface of the thread, which causes an increase in the opening and closing operation torque of the valve and thus, difficulty in operation and a severe reduction in the working life of the thread. The use of planetary roller screw is the way to solve this technical problem. The normal planetary roller screw requires a rail change slot. However, for a forced seal ball valve, since the rotation angle of the drive thread is small, usually not more than 360°, the rail change slot is no longer a necessary structure. However, during the reciprocating rotation of the planetary roller screw device, due to factors such as poor manufacturing precision and working environment, the precise positional relationship between the male thread and the female thread cannot be guaranteed during the movement of the planetary roller. After repeated reciprocating rotations, the resulting accumulation of roller position changes causes an axial offset between the planetary roller and the cage. When this axial offset accumulates to a certain extent, the cage will be in contact with the male thread member or the female thread member, causing issues or failures while the male thread member or the female thread is rotating.

For another type of seat driven forced seal ball valve, the male threaded seat is driven via planetary roller by the seat driven wheel with female thread to move linearly against the stationary ball and thus, to achieve forced seal against the stationary ball. The operation principle of the planetary roller screw mechanism applied to this type of valve is basically the same as the previous valve with valve sealing member being driven by planetary roller screw to build a mechanical seal against the seat. Due to poor manufacturing precision and working environment, the precise positional relationship between the planetary roller and the male thread and the female thread cannot be guaranteed during the rotation. The accumulated roller position changes caused by the back and forth rotation causes the planetary roller and the cage to be axially offset. When this axial offset accumulates to a certain extent, the cage will contact against the male thread member or the female thread member, causing issues or failures while the male thread member or the female thread is rotating.

CN107763240A discloses a cage reset planetary roller screw device comprising: a male thread member provided with a male thread and a female thread member provided with a female thread where the male thread and the female thread have the same pitch; a number of planetary rollers which are disposed between the male and female threads and provided with ring grooves, a distance between adjacent ring grooves corresponding to the pitch; and wherein the ring grooves of the planetary rollers respectively mesh with the male thread and the female thread, the planetary rollers being disposed between the male thread and the female thread through a cage, and being disposed in roller retaining pockets of the cage.

CN107606224A discloses a similar cage reset planetary roller screw device to that of CN107763240A but provided with limit blocks.

### Summary of the invention

The present disclosure is to provide a technical solution to resetting the cage of a planetary roller screw device in order to maintain the planetary roller in a proper working position between the male and female thread members.

In order to achieve the above objective, the technical solution of the present disclosure is: a cage reset planetary roller screw device, comprising a male thread member provided with a male thread and a female thread member provided with a female thread, where the pitch of the male thread and the female thread is the same, a number of planetary rollers are disposed between the male thread and the female thread, the planetary roller is provided with ring grooves with its spacing being the same as the pitch of the male thread member and the female thread member, and the ring grooves of the planetary roller meshes with the male threads and the female threads respectively. The planetary rollers are held in position by a cage that is disposed between the male and the female threads, and are disposed in roller retaining pockets of the cage. The cage reset planetary roller screw device is provided with limit blocks. The cage reset planetary roller screw device is characterised in that side surfaces of the cage are provided with protruding ends, and the male thread member and/or the female thread member are provided with the limit blocks which are in contact with the protruding ends of the cage in the circumferential direction of the cage.

Further, the cage may be provided with a protruding end on one side; one surface of the cage is the first side surface, where the first side surface is provided with a first protruding end, and the limit block disposed at the male thread member or the female thread member is the first limit block, which is in contact with the first protruding end of the cage in the circumferential direction of the cage.

Further, the cage may be provided with a protruding end on both sides; the sides of the cage are respectively the first side surface and the second side surface, where the first side surface is provided with a first protruding end and the second side surface is provided with a second protruding end, and the first protruding end and the second protruding end are oriented opposite to each other in the circumferential direction of the cage. The male thread member is provided with a first limit block, and the female thread member is provided a second limit block, where the first limit block of the male thread member is in contact with the first protruding end in the circumferential direction of the cage, and the second limit block of the female thread member is in contact with the second protruding end in the circumferential direction of the cage.

Further, the length of the roller retaining pockets corresponds to the length of the planetary rollers.

Furthermore, the side surfaces of the cage are spiral surfaces.

Furthermore, each side surface of the cage is a spiral surface corresponding to the male or female thread.

Further, the cage reset planetary roller screw device is disposed in a forced seal ball valve. The forced seal ball valve includes a seat and a ball assembly, where the ball assembly includes a ball and a sealing member, and the ball is provided with a screw driven wheel. The screw driven wheel is driven via the cage reset planetary roller screw device to press the sealing member against and the seat.

Further, the cage reset planetary roller screw device is disposed in a forced seal ball valve including a ball, a first seat and a first driving wheel. The first driving wheel drives the first seat to press against the ball via the cage reset planetary roller screw device.

The disclosure has the advantages that:
Since the male thread and the female thread take one-way rotational loads, the cage is pushed to accurately reset the planetary roller during the non-load rotation stroke, so that the planetary roller maintains the correct initial working position between the male thread and the female thread, ensuring good working condition of the planetary roller screw. The structure is simple and practically effective.

The present disclosure will be described in detail below with reference to the accompanying drawings and embodiments.

### Figure annotations

In order to more clearly illustrate the technical solutions of the embodiments of the present disclosure, the drawings used in the description of the embodiments of the present disclosure will be briefly described below. It is obvious that the drawings in the following description are only some embodiments of the present disclosure. Other drawings may also be obtained by those of ordinary skills in the field without inventive work.

In the forced seal ball valve,
Figure 1 is a structural view of the present disclosure;
Figure 2 is an exploded view of the structure of the present disclosure; Figure 3 is a structural view of the cage and the planetary rollers of the present disclosure;
Figure 4 is an exploded view of the cage of the present disclosure provided with a protruding end on one side, and the female thread member is provided with a first limit block;
Figure 5 is an exploded view of the cage of the present disclosure provided with a protruding end on one side, and the male thread member is provided with a first limit block;
Figure 6 is a schematic view of the operation of the present disclosure, the male thread member rotates and pushes the female thread member to rotate under load;
Figure 7 is a schematic view of the operation of the present disclosure, the first limit block of the male thread member pushes the cage to rotate toward the initial working position;
Figure 8 is a schematic view of the operation of the present disclosure, the second limit block of the female thread member stops the cage at the initial working position;
Figure 9 is a structural view of the present disclosure in a forced seal ball valve;
Figure 10 is a structural view of the ball driven mechanism in the forced seal ball valve shown in Figure 9;
Figure 11 is a structural view of the present disclosure in a side stem forced seal ball valve;
Figure 12 is a structural view showing the ball and the seat mechanism of the side stem forced seal ball valve shown in Figure 11;
Figure 13 is an exploded view showing the structure of the planetary roller screw device in the side stem forced seal ball valve shown in Figure 11;
Figure 14 is a schematic view showing the operation of the side stem forced seal ball valve shown in Figure 11, with the first driving wheel and the cage rotated to the closed position;
Figure 15 is a schematic view of the operation of the present disclosure in a side stem forced seal ball valve, where the second limit block of the first driving wheel pushes the cage back to the initial working position;
Figure 16 is a schematic view of the operation of the present disclosure in a side stem forced seal ball valve, where the first limit block of the seat stops the cage at the initial working position.

### The detailed implementation plan

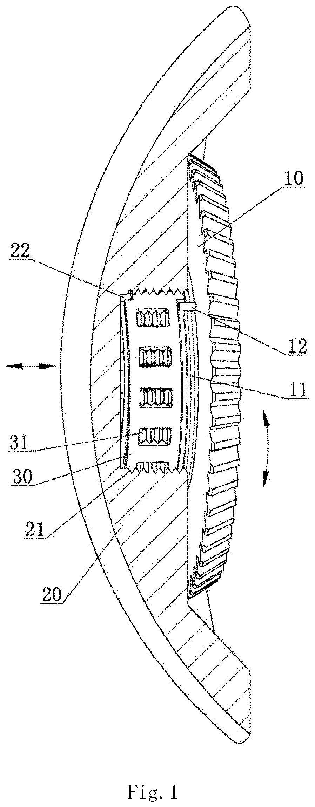

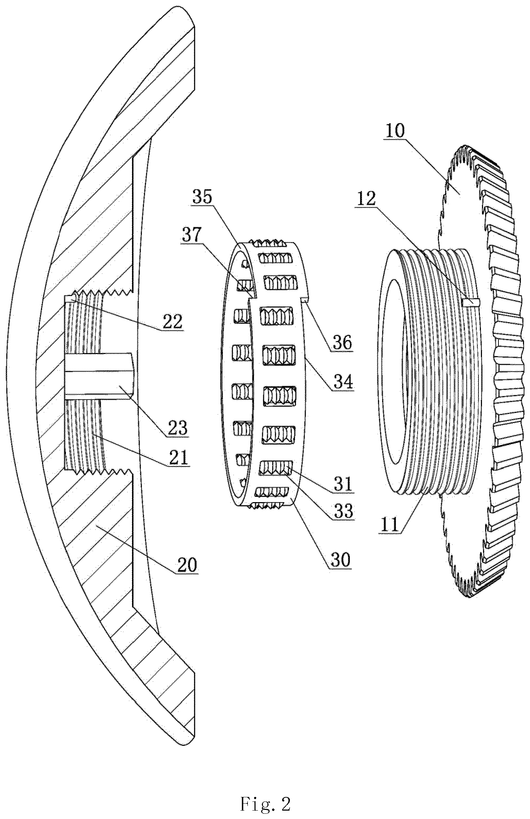

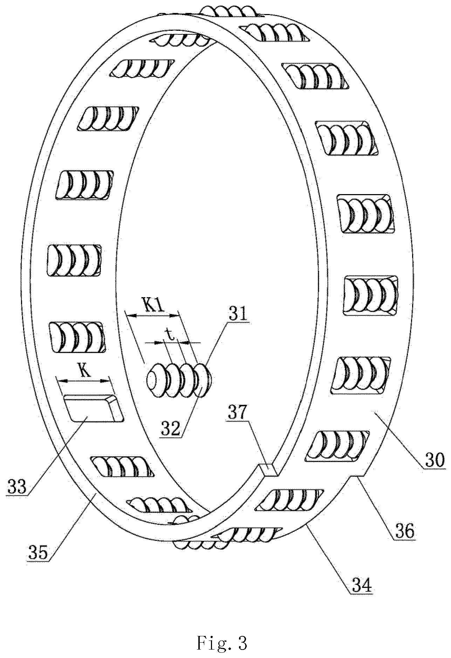

As shown in Figures 1 to 3, a cage reset planetary roller screw device includes a male thread member 10 provided with a male thread 11 and a female thread member 20 provided with a female thread 21, where the pitch of the male thread and that of the female thread are the same. A number of planetary rollers 31 are disposed between the male thread and the female thread, and are provided with ring grooves 32 with the groove distance t being the same as the said pitch. The ring grooves of the planetary rollers are respectively meshed with the male thread and the female thread. The planetary rollers are disposed between the male thread and the female thread via a cage, and are disposed in the roller retaining pockets 33 of the cage. The side surface of the cage is provided with a protruding end (36 or 37 in the Figures). The male thread member and/or the female thread member is provided with a limit block (12 or 22 in the Figures). The limit block is in contact with the protruding end of the cage in the circumferential direction of the cage.

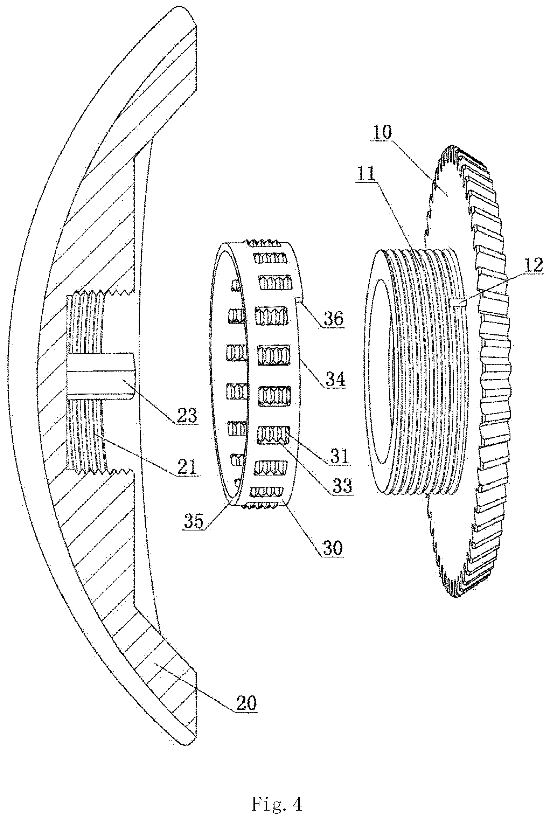

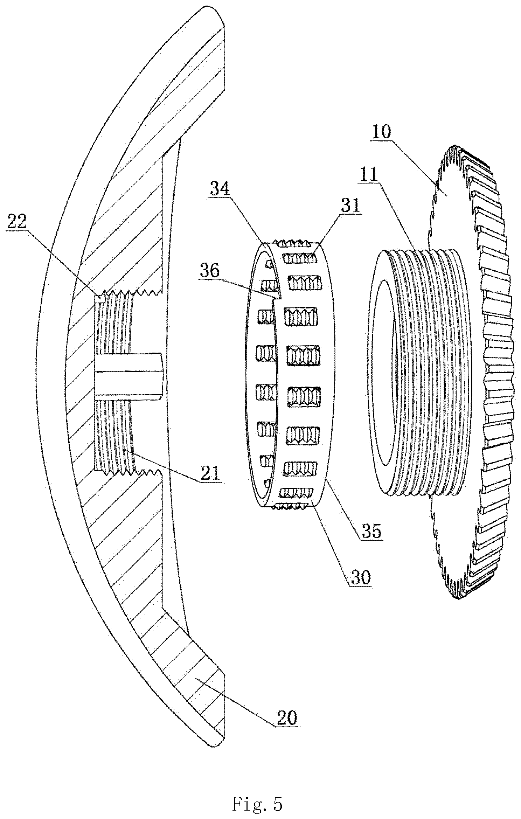

The cage may be provided with a protruding end on one side. As shown in Figures 4 and 5, one side surface of the cage is a first side surface 34, and the first side surface is provided with a first protruding end 36. The limit block is a first limit block (12 in Figure 4 or 22 in Figure 5) provided on the male thread member or the female thread member. The first limit block is in contact with the protruding end of the cage in the circumferential direction of the cage.

The cage may be provided with a protruding end on both sides. As shown in Figures 1 to 3, the two sides of the cage are respectively the first side surface 34 and the second side surface 35, where the first side surface is provided with a first protruding end 36, and the second side surface is provided with a second protruding end 37. The first protruding end and the second protruding end are oriented opposite to each other in the circumferential direction of the cage. The male thread member is provided with a first limit block 12, and the female thread member is provided with a second limit block 22; the first limit block of the male thread member is in contact with the first protruding end in the circumferential direction of the cage, and the second limit block is of the female thread member is in contact with the second protruding end in the circumferential direction of the cage. In fact, the first side surface of the cage and the first protruding end are the counterparts of the second side surface and the second protruding end, so can be interchangeably defined or used, that is, the first protruding end may correspond to the second limit block and touches the second limit block, and the second protruding end may correspond to the first limit block and touches the first limit block.

The length of the roller retaining pockets corresponds to the length of the planetary rollers. The meaning of "corresponds to" is that the length K of the roller retaining pockets is slightly larger than the length K1 of the planetary rollers, so that there is a gap left between each roller retaining pocket and the two ends of the corresponding planetary roller, allowing the planetary rollers to rotate freely within the roller retaining pockets without sliding incorrectly in the axial direction. Based on experience, it is a decent choice to set the length of the roller retaining pockets as 1.1 times the length of the planetary rollers, or the former as 0.2 mm to 1.0 mm greater than the latter.

The side surfaces of the cage are spiral surfaces.

More specifically, each side surface of the cage is a spiral surface corresponding to the male or the female thread.

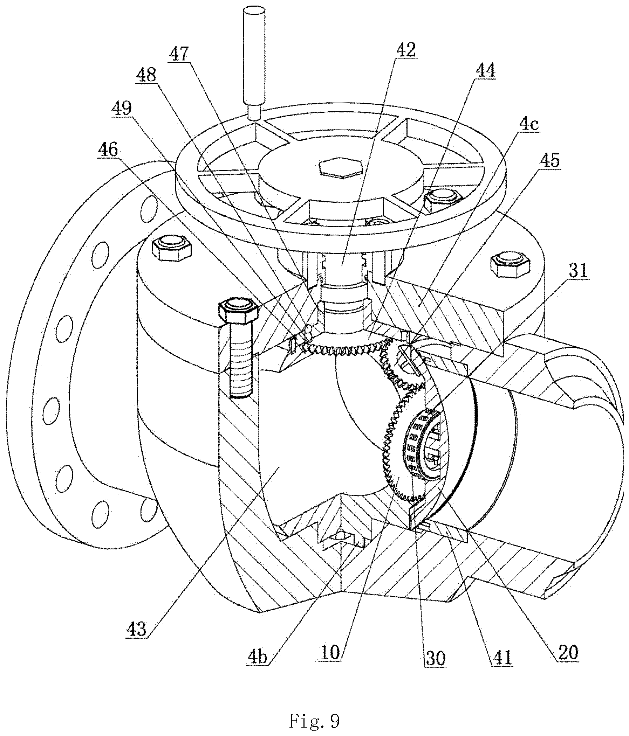

As shown in Figure 9, the cage reset planetary roller screw device is disposed in a forced seal ball valve including a seat 41 and a ball assembly. The ball assembly includes a ball 43 and a sealing member 20. The ball is provided with a screw driving wheel, and the screw driving wheel is driven via the cage reset planetary roller screw device to press the sealing member against the seat.

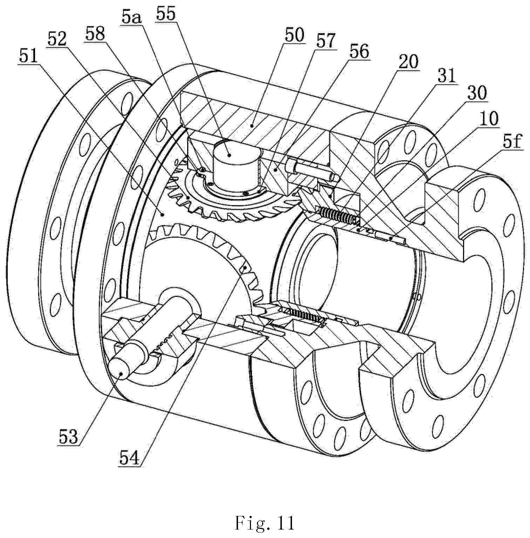

As shown in Figure 11, as another application, the cage reset planetary roller screw device is disposed in a forced seal ball valve; the forced seal ball valve includes a ball, a first seat and a first driving wheel. The first driving wheel drives the first seat to press against the ball through the cage reset planetary roller screw device.

### Embodiment 1:

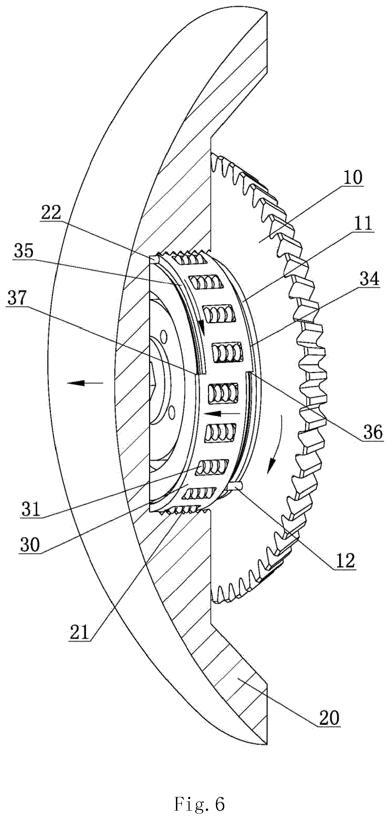

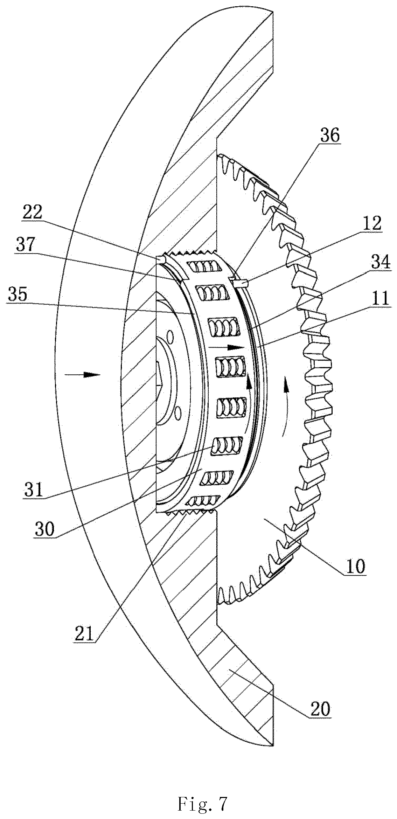

As shown in Figures 1 to 3, a cage reset planetary roller screw device includes a male thread member 10 provided with a male thread 11 and a female thread member 20 provided with a female thread 21. The male and female threads have the same pitch. In this embodiment, the male thread member rotates against the female thread member and thus, the female thread member moves in the axial direction. The stroke where the female thread member moves in a direction away from the male thread member is a load-bearing stroke (refer to Figure 6), that is, the male thread member exerts a force on the female thread member when it rotates, so that the female thread member has to move against the external force. The movement stroke where the female thread member moves toward the male thread member is a non-loading stroke (refer to Figure 7), that is, when the male thread member rotates, it only drives the female thread member itself, and even pushes the female thread member toward the male thread member. The distance that the female thread member possibly moves in the axial direction is limited, not greater than the pitch of the male or the female thread and usually only about one-half of the pitch. A number of planetary rollers 31 are disposed between the male thread and the female thread. The planetary rollers are provided with ring grooves 32 whose groove distance t is the same as the pitch. The ring grooves of the planetary rollers respectively mesh with the male thread and the female thread. The planetary rollers are disposed between the male thread and the female thread via the cage, and are disposed in the roller retaining pockets 33 of the cage. The length K of the roller retaining pockets is slightly larger than the length K1 of the planetary rollers, so that there is a gap of approximately 0.2 mm left between each roller retaining pocket and the both ends of the corresponding planetary roller, allowing the planetary rollers to freely rotate in the roller retaining pockets without moving incorrectly in the axial direction. Experiments have shown that the movement of the cage can be made more steady by controlling the gap between the roller retaining pockets and the ends of the planetary rollers.

The two sides of the cage are the first side surface 34 and the second side surface 35 respectively. The first side surface and the second side surface of the cage are spiral surfaces. The spiral surfaces of the first side surface and the second side surface correspond to the male thread or the female thread. The spiral surface of the first side surface forms a first protruding end 36 at the position where a round of rotation ends, and the spiral surface of the second side surface forms a second protruding end 37 at the position where a round of rotation ends. The width of the first protruding end and of the second protruding end is equal to the pitch of the male thread or the female thread. The first protruding end and the second protruding end are opposite in the circumferential direction of the cage.

The male thread member is provided with a first limit block 12 which is a pin that protrudes from the male thread member. The female thread member is provided with a second limit block 22, which is also a pin that protrudes from the female thread member. The first limit block of the male thread member touches the first protruding end in the circumferential direction of the cage, and the second limit block of the female thread member touches the second protruding end in the circumferential direction of the cage. In fact, the first side surface of the cage and the first protruding end are the counterparts of the second side surface and the second protruding end; the two side surfaces of the cage are exchangeable with the same structure and function.

In this embodiment, the nearest position that the female thread member can be moved axially to the male thread member is considered as the initial working position (as shown in Figure 1). The first limit block 12 of the male thread member is in contact with (or nearly in contact with) the first protruding end 36 of the cage, while the second limit block 22 of the female thread member is in contact with (or nearly in contact with) the second protruding end 37 of the cage.

When the male thread member rotates and drives the female thread member to move during the load-bearing stroke, as shown in Figure 6, the male thread transmits movement to the female thread through the planetary rollers, reducing the frictional resistance and allowing the male thread member to drive the female thread member smoothly under external load. During this process, since the planetary rollers roll between the male thread and the female thread, the rotation of the cage is slower than the rotation of the male thread member and thus, the first limit block is gradually separated from the first protruding end of the cage. Due to possible poor manufacturing precision and working environment, the theoretically expected pure rolling motion between the planetary rollers and the male thread and the female thread during the movement cannot be guaranteed. Consequently, the actual relative position of the rollers to the threads may be ahead of or behind the theoretical relative position.

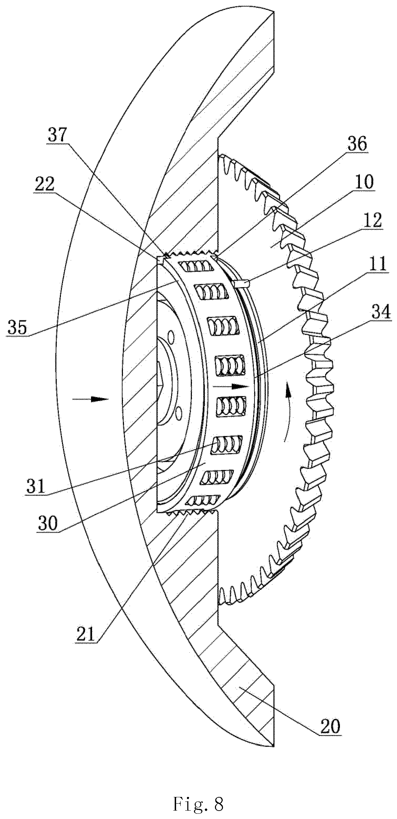

Similarly, when the male thread member rotates to drive the female thread member during the non-loading stroke, as shown in Figure 7, the planetary rollers may also be advanced or lagging behind in position when the male thread member rotates. If the movement of the planetary roller relative to the male thread member is lagging behind, as shown in Figure 7, the first limit block 12 of the male thread member will push the cage to rotate. Since the stroke is non-loading, the planetary rollers slide between the male and female threads while rolling, and the cage and the planetary rollers return to the initial working position (as shown in Figure 1). As shown in Figure 8, if the planetary rollers move ahead of the male thread member, when the cage returns to the initial working position in the circumferential direction before the male thread member does, the second limit block of the female thread member stops the rotation of the cage. The cage and the planetary rollers will slide along the thread back to the initial working position. Thus, when a working cycle is completed, the cage will always return to the initial working position. Since the cage controls the cylindrical positions of the planetary rollers, the planetary rollers meshed with the female and the male threads can also accurately return to the initial working position. The technical solution of the embodiment utilizes the characteristics that the male thread and the female thread carry a one-way rotational load. The cage is pushed to accurately reset the planetary rollers during the non-load rotation stroke, so that the planetary rollers maintain the correct working positions between the male thread and the female thread. This ensures the good working condition of the planetary roller screw device. The structure is simple and practically effective.

### Embodiment 2:

A cage reset planetary roller screw device. This embodiment is a structural simplification of the first embodiment. The cage may be a cage with a protruding end on one side only.

As shown in Figure 4, the two ends of the cage are respectively the first side surface 34 and the second side surface 35, where the first side surface of the cage is a spiral surface. The spiral surface of the first side surface corresponds to the male or the female thread. The end of the spiral surface of the first side surface forms a first protruding end 36, with the width of the first protruding end being equal to the pitch of the male or the female thread. The second side surface 35 is a flat surface with no protruding end.

The male thread member is provided with a first limit block 12, which is a pin that protrudes from the male thread member. The first limit block of the male thread member touches the first protruding end in the circumferential direction of the cage.

Based on actual engineering experience, for a specific set up and application environment, when the male thread member drives the female thread member through the planetary rollers, the planetary rollers will always tend to be ahead of or behind its expected position as they move toward the initial working position (i.e. during the non-loading stroke). If the planetary rollers always lag behind the male thread member as they move toward the initial working position, then this embodiment should be adopted. The structural complexity can therefore be reduced, and the manufacturing cost and maintenance cost saved.

### Embodiment 3:

A cage reset planetary roller screw device. This embodiment is a structural simplification of the first embodiment. The cage may be a cage with a protruding end on one side only.

As shown in Figure 5, the two ends of the cage are the first side surface 34 and the second side surface 35 respectively, where the first side surface of the cage is a spiral surface. The spiral surface of the first side surface corresponds to the male or the female thread. The end of the spiral surface of the first side surface forms a first protruding end 36, with the width of the first protruding end being equal to the pitch of the male or female thread. The second side surface 35 is a flat surface with no protruding end.

The female thread member is provided with a first limit block 22, which is a pin that protrudes from the female thread member. The first limit block of the female thread member touches the first protruding end in the circumferential direction of the cage.

Based on actual engineering experience, for a specific set up and application environment, when the male thread member drives the female thread member through the planetary rollers, the planetary rollers will always tend to be ahead of or behind its expected position as they move toward the initial working position (i.e. during the non-loading stroke). If the planetary roller is always ahead of the male thread member as they move toward the initial working position, then this embodiment should be adopted. The structural complexity can therefore be reduced, and the manufacturing cost and maintenance cost saved.

### Embodiment 4:

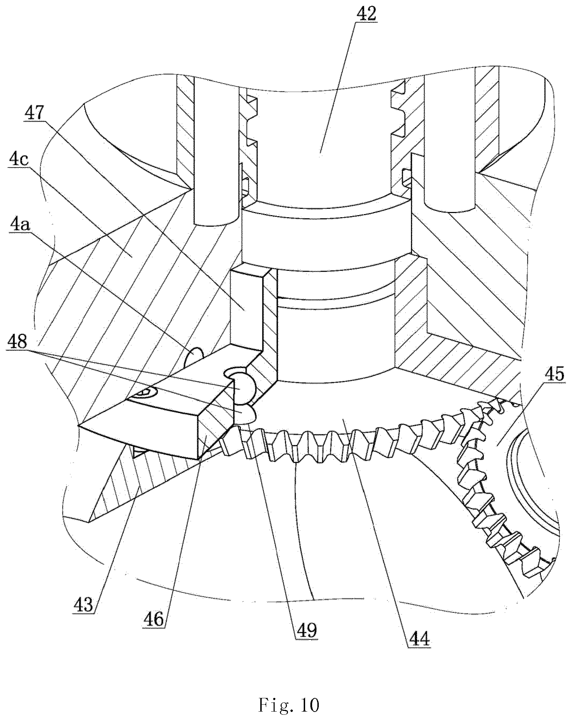

As shown in Figures 9 and 10, a cage reset planetary roller screw device is disposed in the forced seal ball valve. The forced seal ball valve comprises a seat 41, a ball assembly and a stem 42. The ball assembly comprises a ball 43 and a sealing member 20. The ball is provided with a screw driving wheel 10; the screw driving wheel drives the sealing member inward and outward via screw connection. The stem drives a stem gear 44 to rotate. The stem gear drives the screw driving wheel to rotate through the intermediate gear 45. The upper part of the ball is provided with a stem gear protection cover 46 which is fixedly connected with the ball. The stem gear protection cover is provided with a ball rotating shaft 47. The ball rotates about the rotating shaft and the rotating shaft of the stem gear is coaxial with the ball rotating shaft. The protection cover is provided with a through hole. The through hole is provided with a locking object 48. The locking object is two spherical objects. A first recessed hole 49 is disposed at a corresponding position on the upper surface of the stem gear, and a second recessed hole 4a is disposed at a corresponding position of the upper cover 4c of the valve body. The locking object can fit in the space formed by the above-mentioned through hole and the first recessed hole or in the space formed by the above-mentioned through hole and the second recessed hole. When the locking object fits in the space formed by the through hole and the first recessed hole (as shown in Figure 10), the stem gear can rotate the ball between the open and closed positions via the locking object. When the ball is rotated to the closed position (as shown in Figure 9), the through hole, the first recessed hole and the second recessed hole are aligned, and the ball is stopped by the lower trunnion stop 4b. Therefore, the locking object fits into the space formed by the through hole and the second recessed hole to lock the ball in the closed position. The center of the sealing member is provided with a hexagonal rod 23, and the ball is provided with a hexagonal hole corresponding to the hexagonal rod of the sealing member. The hexagonal rod of the sealing member is slideably engaged with the hexagonal hole of the ball to allow the sealing member to linearly move back and forth with respect to the valve body. When the ball valve is in the open position, the sealing member is in contact with the ball, and the sealing member and the ball form a common spherical surface.

During the closing of the ball valve, the locking object locks the stem gear with the ball. The stem starts to rotate the ball together with the sealing member at the same time. When the ball rotates to the closed position, the ball stops rotating and the locking object releases the locking relationship between the stem gear and the ball. The stem drives the stem gear 44 to continue to rotate. The stem gear drives the screw driving wheel to rotate. The sealing member is pressed against the seat to achieve the forced sealing of the ball valve. During the opening of the ball valve, the stem gear first drives the sealing member to move away from the seat. When the sealing member retracts to the position that's in contact with the ball, the stem gear drives the ball to rotate toward the opening direction through the screw driving wheel and the sealing member. At this moment, the locking object also re-locks the stem gear with the ball until the ball is rotated to the open position. During the closing operation, the sealing member is under the pressure of the pipe medium and the load of pressing the seat. The thread of screw driving wheel and the sealing member need to handle this load. However, during the opening operation, the screw driving wheel and the sealing member only need to take the minimal load caused by their own rotation.

In order to reduce the operating torque of the stem during valve operations, the screw driving wheel drives the sealing member through a planetary roller mechanism. The conventional planetary roller screw device requires a rail change slot. For a forced seal ball valve, the sealing member only moves within a small distance range, and experiences a minimal rotation angle while driving the sealing member. In this embodiment, the rotation of the screw driving wheel to drive the sealing member is no more than 180°. Thus, the rail change slot is no longer a necessary structure.

According to applications and experiments, the issue of the planetary roller screw device in the forced sealing ball valve is that during the back-and-forth rotation of the planetary roller screw device, due to poor manufacturing precision and working environment, the precise positional relationship between the planetary rollers and the male and the female threads cannot be maintained. That is, each time the ball is rotated to the open position, the planetary rollers cannot be restored to the same position. The accumulated offset caused by multiple rotations produces an axial offset in the planetary rollers against the cage. When such axial offset is accumulated to a certain extent, the cage will press the male or the female threads hindering their normal rotation and even causing failures of the ball valve.

In order to solve this technical problem, the forced seal ball valve of the present embodiment adopts the cage reset planetary roller screw device of the first embodiment. As shown in Figures 1 to 3, in the present embodiment, the screw driving wheel 10 is a male thread member provided with a male thread 11 as in the first embodiment, and the sealing member 20 is the female thread member provided with female thread 21 as in the first embodiment. As described in the first embodiment, a number of planetary rollers 31 are disposed between the male thread and the female thread. The planetary rollers are disposed between the male and the female threads through the cage 30, and are held in the roller retaining pockets 33.

The planetary rollers 31 has a clearance fit with the male thread 11 and the female thread 21, that is, when the planetary roller screw is not subjected to a load, the planetary rollers can rotate or slide between the male thread and the female thread.

In this embodiment, when the ball valve is in the open position, the planetary roller screw device is in the initial working position. The sealing member 20 (the female thread member) is in contact with the ball, and the screw driving wheel 10 (the male thread member) cannot continue to drive the sealing member further toward the ball. At this moment, the planetary rollers and the cage are axially centered at the female and male threads.

In the stroke in which the screw driving wheel 10 (the male thread member) drives the sealing member to press against the seat, the sealing member (the female thread member) moves away from the screw driving wheel (the male thread member). This is a load-bearing stroke.

In the stroke in which the screw driving wheel drives the sealing member toward the ball, the sealing member (the female thread member) moves in the direction approaching the screw driving wheel (the male thread member). This is a non-loading stroke. When the screw driving wheel rotates, it only needs to drive the sealing member to move itself.

The technical solution of the embodiment has the advantages that:
The male thread and the female thread only take one-direct stroke load to push the cage to accurately reset the planetary rollers during the non-load rotation stroke, so that the planetary rollers maintain the correct initial position between the male thread and the female thread. The accurate initial position ensures the good working condition of the planetary roller screw. The structure is simple and practically effective.

Also, according to the structural principle of the present embodiment, the screw driving wheel can also be designed as a female thread member provided with a female thread, and the sealing member can be designed as a male thread member provided with a male thread.

### Embodiment 5:

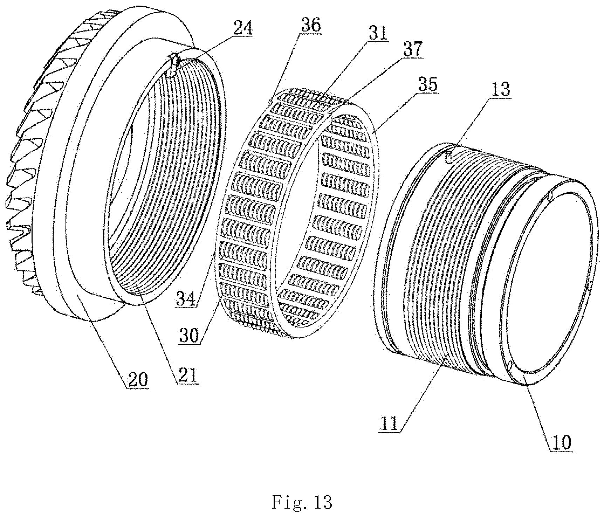

As shown in Figures 11 to 16, a cage reset planetary roller screw device is disposed in the forced seal ball valve. The forced sealing ball valve is a side stem forced seal ball valve, comprising a valve body 50, a first seat 10 and a ball 51. The first seat moves reciprocally to the direction of the ball and is pressed against the ball to achieve a forced sealing. The side stem forced seal ball valve is provided with a first driving wheel 20 for driving the movement of the first seat and a second driving wheel 52 for driving the rotation of the ball. The first driving wheel is coaxial with the seat. The first driving wheel drives the rotation of the second driving wheel. The first driving wheel is driven by a side stem 53.

The side stem is provided with a stem gear 54. The first driving wheel and the second driving wheel mesh. The stem gear drives the first driving wheel through gear mesh. The ball is provided with a first rotating shaft 55, and is installed in the valve body through the first bearing block 56. The first rotating shaft is provided with a ball driving ring 57. The ball driving ring is disposed between the first bearing block and the ball. The ball driving ring is fixedly connected with the ball. The outer diameter of the ball driving ring is provided with a drive lever 58, and the drive lever is provided with a through hole 59. A locking ball 5a is placed in the through hole, where the thickness of the drive lever is smaller than the diameter of the locking ball. The second driving wheel is mounted on the ball driving ring. The second driving wheel is rotatably fit with the outer diameter of the ball driving ring, and is located between the drive lever and the ball. The first bearing block is provided with a first recessed hole 5b whose position corresponds to the through hole of the drive lever, and the second driving wheel is provided with a second recessed hole 5c whose position corresponds to the through hole of the drive lever. When the ball is in the closed position, the locking ball is located in the space formed by drive lever through hole and the first recessed hole to lock the ball in the closed position; when the ball is released from the closed position, the locking ball is located in the space formed by the through hole of the drive lever and the second recessed hole, locking the connection relationship between the second driving wheel and the ball drive ring, so that the second driving wheel drives the ball to rotate.

In this embodiment, the first driving wheel has a rotation stroke of no more than 180° in the opening or closing operations of the forced seal ball valve.

The second driving wheel is provided with a drive pin 5d. The ball is provided with a ring groove 5e. The drive pin of the second driving wheel is embedded in the ring groove of the ball, and drives to rotate the ball toward the opening direction.

The end of the first seat is provided with a pin 5f to make the first seat move along the seat axis within the valve body without rotating.

When the side stem forced seal ball valve is in the open position, the ball is in the open position. The locking ball is located in the space formed by the through hole of the drive lever and the second recessed hole, thereby locking the connection relationship between the second driving wheel and the ball drive ring. During the closing operation, the stem drives the first driving wheel to rotate. The first driving wheel drives the seat to move toward the ball, and the first driving wheel also drives the second driving wheel to rotate. The ball stops rotating when it reaches the closed position. The stem continues to rotate in the closing direction. The second driving wheel pushes the locking ball out of the second recessed hole. The locking ball enters the space formed by the through hole of the drive lever and the first recessed hole. The locking relationship between the second driving wheel and the ball drive ring is released, and the ball is locked in the closed position. At this point, the ball is aligned with the seat yet leaving a gap in between. The second driving wheel can idle on the ball drive ring, and the first driving wheel continues to drive the first seat to move, so that the first seat is pressed against the ball achieving a forced sealing. During the opening operation, the stem drives the first driving wheel to rotate in the opening direction. The first driving wheel drives the seat to move away from the ball, and the first driving wheel also drives the second driving wheel to rotate in the opening direction. The second driving wheel can idle on the ball drive ring while the ball is still locked in the closed position. After the first seat moves away from the ball, when the second recessed hole rotates to align with the drive lever through hole and the first recessed hole, the drive pin simultaneously pushes the ball to rotate in the opening direction, and the locking ball moves out from the first recessed hole. The locking ball enters into the space formed by the drive lever through hole and the second recessed hole, and rotates with the ball drive lever and the second driving wheel in the opening direction until the ball is turned to the open position.

The forced seal ball valve of this embodiment employs a cage reset planetary roller screw device.

The first driving wheel drives the seat through the cage reset planetary roller screw device. The planetary roller screw device includes a male thread member 10 provided with a male thread 11 and a female thread member 20 provided with a female thread 21. The male thread member in this embodiment is a seat 10, and the female thread member is the first driving wheel 20. This embodiment adopts the same planetary roller and cage structure as in the first embodiment.

A first limit block 13 is provided on the seat 10 (the male thread member), and the first limit block is a pin that protrudes from the seat. A second limit block 24 is provided on the first driving wheel 20 (the female thread member), and the second limit block is a block that protrudes from the end of the first driving wheel.

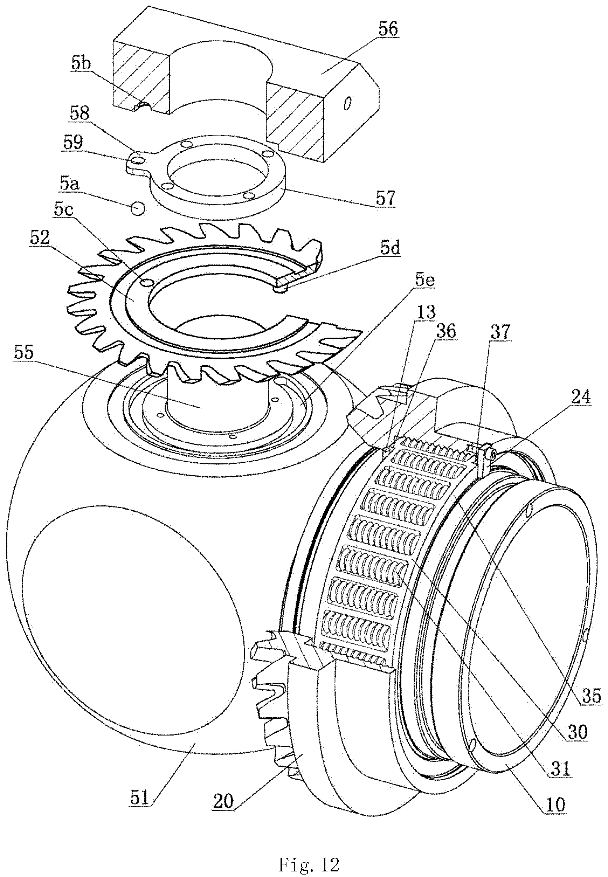

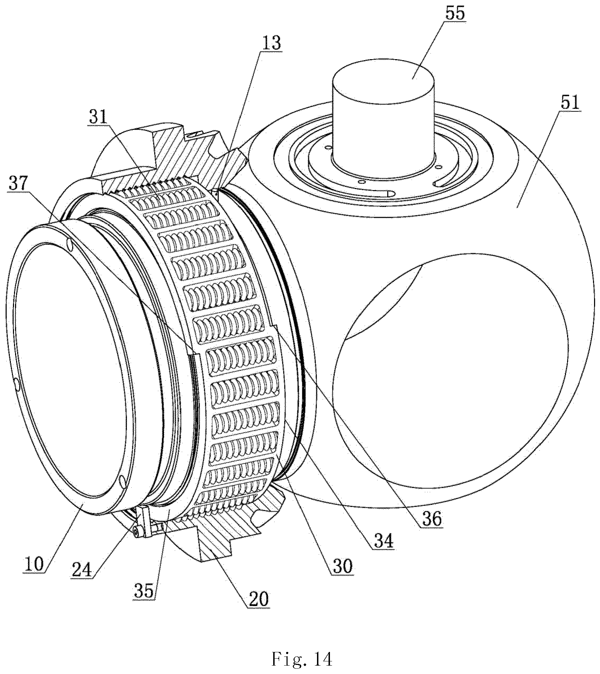

When the ball valve is in the open position, the planetary roller screw device is in its initial working position, and the seat 10 is away from the ball. At this point, the planetary rollers and the cage are axially centered at the female and the male threads, as shown in Figure 12. The first limit block 13 of the seat is in contact with (or close to) the first protruding end 36 of the cage, while the second limit block 24 of the first driving wheel is in contact with (or close to) the second protruding end 37 of the cage. During the closing of the forced seal ball valve, the ball rotates from the open position to the closed position, and stops rotating when it reaches the closed position. The first driving wheel continues to rotate, and the female thread of the first driving wheel drives the seat to move toward the ball via the planetary rollers and the male thread until the seat is pressed against the ball tightly, as shown in Figure 14. As the planetary rollers roll between the male thread and the female thread, the rotation of the cage lags behind the rotation of the first driving wheel, and the second limit block is gradually separated from the second protruding end of the cage. During this process, due to poor manufacturing precision and working environment, the theoretically pure rolling motion between the planetary rollers and the male and the female threads cannot be precisely guaranteed. The positional relationship between the rollers and the threads may be ahead or behind of the theoretical relationship.

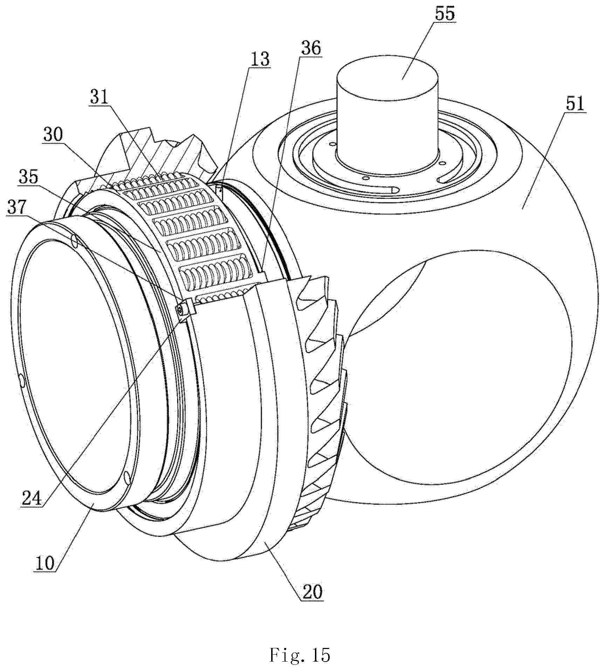

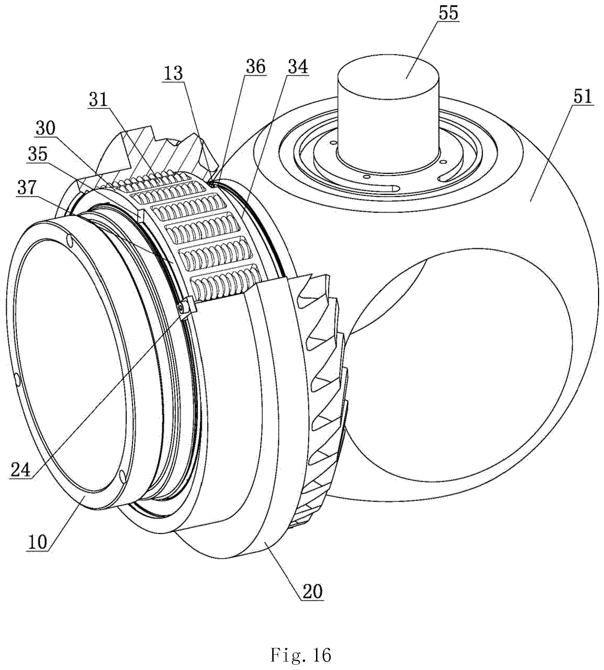

During the opening process of the forced seal ball valve, the seat is driven away from the ball when the first driving wheel rotates. This is a non-loading rotation. Similarly, during the rotation of the first driving wheel, the planetary rollers may also move ahead or behind of their theoretical position. If the planetary rollers lag behind the first driving wheel, as shown in Figure 15, the female thread limit block of the first driving wheel pushes the cage back to the initial working position. Since the opening process is non-loading rotation, the planetary rollers can slide in the gap between the male and female threads while rolling, so that the cage will drive the planetary rollers back to the initial working position. If the planetary roller moves ahead of the first driving wheel, the first limit block of the seat will stop the cage at the initial working position as shown in Figure 16. The first driving wheel continues to rotate, and the female thread of the first driving wheel pushes the planetary rollers back to the initial working position.

## Claims

1. A cage reset planetary roller screw device for a forced seal ball valve comprising:
a male thread member (10) provided with a male thread (11) and a female thread member (20) provided with a female thread (21) where the male thread (11) and the female thread (21) have the same pitch;
a number of planetary rollers (31) which are disposed between the male and female threads (11, 21) and provided with ring grooves, a distance between adjacent ring grooves corresponding to the pitch; and wherein the ring grooves of the planetary rollers (31) respectively mesh with the male thread (11) and the female thread (21), the planetary rollers (31) being disposed between the male thread (11) and the female thread (21) through a cage, and being disposed in roller retaining pockets (33) of the cage;
wherein the cage reset planetary roller screw device is provided with limit blocks (12, 22); the cage reset planetary roller screw device being **characterised in that** side surfaces of the cage are provided with protruding ends (36, 37) and the male thread member (10) and/or the female thread member (20) is provided with the limit blocks (12, 22) that are in contact with the protruding ends (36, 37) of the cage in a circumferential direction of the cage.

2. The cage reset planetary roller screw device according to claim 1, wherein one side surface of the cage comprises a first side surface, which is provided with a first protruding end (36); and where the limit block is a first limit block (12) disposed on the male thread member (10) or the female thread member (20), and is in contact with the first protruding end (36) of the cage in the circumferential direction of the cage.

3. The cage reset planetary roller screw device according to claim 1, wherein two side surfaces of the cage respectively comprise a first side surface and a second side surface, wherein the first side surface is provided with a first protruding end (36), and the second side surface is provided with a second protruding end (37); and wherein the first protruding end (36) and the second protruding end (37) are opposite to each other in the circumferential direction of the cage; the male thread member (10) is provided with a first limit block (12), and the female thread member (20) is provided with a second limit block (22) such that the first limit block (12) of the male thread member (10) is in contact with the first protruding end (36) in the circumferential direction of the cage, and the second limit block (22) of the female thread member (20) is in contact with the second protruding end (37) in the circumferential direction of the cage.

4. The cage reset planetary roller screw device according to claim 1, wherein the length of the roller retaining pockets (33) corresponds to the length of the planetary rollers (31).

5. The cage reset planetary roller screw device according to claim 1, wherein a side surface of the cage is a spiral surface.

6. The cage reset planetary roller screw device according to claim 5, wherein the side surface of the cage corresponds to the male or the female thread (11, 21).

7. The cage reset planetary roller screw device according to claim 1, wherein said cage reset planetary roller screw device is disposed in a forced seal ball valve including a seat (41) and a ball assembly, the ball assembly comprising a ball (43) and a sealing member, the ball being provided with a screw driving wheel, and the screw driving wheel drives the sealing member to press against the seat (41) via the cage reset planetary roller screw device.

8. The cage reset planetary roller screw device according to claim 1, wherein said cage reset planetary roller screw device is disposed in a forced seal ball valve including a ball and a first seat and a first driving wheel, the first driving wheel drives the first seat to press against the ball through the cage reset planetary roller screw device.

9. A forced seal ball valve including a cage reset planetary roller screw device according to any one of the preceding claims.

## Patentansprüche

1. Planetenrollengewindevorrichtung mit Käfigrückstellung für ein zwangsabgedichtetes Kugelventil, die Folgendes umfasst:
ein Außengewindeelement (10), das mit einem Außengewinde (11) versehen ist, und ein Innengewindeelement (20), das mit einem Innengewinde (21) versehen ist, wobei das Außengewinde (11) und das Innengewinde (21) die gleiche Steigung haben;
eine Anzahl von Planetenrollen (31), die zwischen dem Außen- und dem Innengewinde (11, 21) angeordnet und mit Ringnuten versehen sind, wobei ein Abstand zwischen benachbarten Ringnuten der Steigung entspricht; und wobei die Ringnuten der Planetenrollen (31) jeweils mit dem Außengewinde (11) und dem Innengewinde (21) kämmen, wobei die Planetenrollen (31) zwischen dem Außengewinde (11) und dem Innengewinde (21) durch einen Käfig angeordnet und in Rollenhaltetaschen (33) des Käfigs angeordnet sind;
wobei die Käfigrückstell-Planetenrollengewindevorrichtung mit Begrenzungsblöcken (12, 22) versehen ist; wobei die Käfigrückstell-Planetenrollengewindevorrichtung **dadurch gekennzeichnet ist, dass** Seitenflächen des Käfigs mit vorstehenden Enden (36, 37) versehen sind und das Außengewindeelement (10) und/oder das Innengewindeelement (20) mit den Begrenzungsblöcken (12, 22) versehen ist, die mit den vorstehenden Enden (36, 37) des Käfigs in einer Umfangsrichtung des Käfigs in Kontakt sind.

2. Planetenrollengewindevorrichtung mit Käfigrückstellung nach Anspruch 1, wobei eine Seitenfläche des Käfigs eine erste Seitenfläche umfasst, die mit einem ersten vorstehenden Ende (36) versehen ist; und wobei der Begrenzungsblock ein erster Begrenzungsblock (12) ist, der auf dem Außengewindeelement (10) oder dem Innengewindeelement (20) angeordnet ist und mit dem ersten vorstehenden Ende (36) des Käfigs in der Umfangsrichtung des Käfigs in Kontakt ist.

3. Planetenrollengewindevorrichtung mit Käfigrückstellung nach Anspruch 1, wobei zwei Seitenflächen des Käfigs jeweils eine erste Seitenfläche und eine zweite Seitenfläche umfassen, wobei die erste Seitenfläche mit einem ersten vorstehenden Ende (36) versehen ist und die zweite Seitenfläche mit einem zweiten vorstehenden Ende (37) versehen ist; und wobei das erste vorstehende Ende (36) und das zweite vorstehende Ende (37) einander in der Umfangsrichtung des Käfigs gegenüberliegen; das Außengewindeelement (10) mit einem ersten Begrenzungsblock (12) versehen ist und das Innengewindeelement (20) mit einem zweiten Begrenzungsblock (22) versehen ist, so dass der erste Begrenzungsblock (12) des Außengewindeelements (10) mit dem ersten vorstehenden Ende (36) in der Umfangsrichtung des Käfigs in Kontakt ist und der zweite Begrenzungsblock (22) des Innengewindeelements (20) mit dem zweiten vorstehenden Ende (37) in der Umfangsrichtung des Käfigs in Kontakt ist.

4. Planetenrollengewindevorrichtung mit Käfigrückstellung nach Anspruch 1, wobei die Länge der Rollenhaltetaschen (33) der Länge der Planetenrollen (31) entspricht.

5. Planetenrollengewindevorrichtung mit Käfigrückstellung nach Anspruch 1, wobei eine Seitenfläche des Käfigs eine Spiralfläche ist.

6. Planetenrollengewindevorrichtung mit Käfigrückstellung nach Anspruch 5, wobei die Seitenfläche des Käfigs dem Außen- oder dem Innengewinde (11, 21) entspricht.

7. Planetenrollengewindevorrichtung mit Käfigrückstellung nach Anspruch 1, wobei die Planetenrollengewindevorrichtung mit Käfigrückstellung in einem zwangsabgedichteten Kugelventil angeordnet ist, das einen Sitz (41) und eine Kugelanordnung enthält, wobei die Kugelanordnung eine Kugel (43) und ein Dichtungselement umfasst, wobei die Kugel mit einem Schraubenantriebsrad versehen ist und das Schraubenantriebsrad das Dichtungselement antreibt, um über die Planetenrollengewindevorrichtung mit Käfigrückstellung gegen den Sitz (41) zu drücken.

8. Planetenrollengewindevorrichtung mit Käfigrückstellung nach Anspruch 1, wobei die Planetenrollengewindevorrichtung mit Käfigrückstellung in einem zwangsabgedichteten Kugelventil angeordnet ist, das eine Kugel und einen ersten Sitz und ein erstes Antriebsrad enthält, wobei das erste Antriebsrad den ersten Sitz antreibt, um über die Planetenrollengewindevorrichtung mit Käfigrückstellung gegen die Kugel zu drücken.

9. Zwangsabgedichtetes Kugelventil, das eine Planetenrollengewindevorrichtung mit Käfigrückstellung nach einem der vorhergehenden Ansprüche enthält.

## Revendications

1. Dispositif de vis à rouleaux planétaires à réarmement avec cage pour une vanne à bille à étanchéité forcée comprenant :
un élément fileté mâle (10) pourvu d'un filetage mâle (11) et un élément fileté femelle (20) pourvu d'un filetage femelle (21) où le filetage mâle (11) et le filetage femelle (21) ont le même pas ;
plusieurs rouleaux planétaires (31) disposés entre les filetages mâle et femelle (11, 21) et pourvus de rainures annulaires, une distance entre les rainures annulaires adjacentes correspondant au pas ; et dans lequel les rainures annulaires des rouleaux planétaires (31) s'engrènent respectivement avec le filetage mâle (11) et le filetage femelle (21), les rouleaux planétaires (31) étant disposés entre le filetage mâle (11) et le filetage femelle (21) à travers une cage, et étant disposés dans des poches de retenue des rouleaux (33) de la cage ;
dans lequel le dispositif de vis à rouleaux planétaires à réarmement avec cage est pourvu de butées (12, 22) ; le dispositif de vis à rouleaux planétaires à réarmement avec cage est **caractérisé en ce que** les surfaces latérales de la cage sont pourvues d'extrémités saillantes (36, 37) et que l'élément fileté mâle (10) et/ou l'élément fileté femelle (20) est pourvu de butées (12, 22) en contact avec les extrémités saillantes (36, 37) de la cage dans une direction circonférentielle de la cage.

2. Dispositif de vis à rouleaux planétaires à réarmement avec cage selon la revendication 1, dans lequel une surface latérale de la cage comprend une première surface latérale pourvue d'une première extrémité saillante (36) ; et dans lequel la butée est une première butée (12) disposée sur l'élément fileté mâle (10) ou l'élément fileté femelle (20), et est en contact avec la première extrémité saillante (36) de la cage dans la direction circonférentielle de la cage.

3. Dispositif de vis à rouleaux planétaires à réarmement avec cage selon la revendication 1, dans lequel deux surfaces latérales de la cage comprennent respectivement une première surface latérale et une deuxième surface latérale, dans lequel la première surface latérale est pourvue d'une première extrémité saillante (36), et la deuxième surface latérale est pourvue d'une deuxième extrémité saillante (37) ; et dans lequel la première extrémité saillante (36) et la deuxième extrémité saillante (37) sont opposées l'une à l'autre dans la direction circonférentielle de la cage ; l'élément fileté mâle (10) est pourvu d'une première butée (12) et l'élément fileté femelle (20) est pourvu d'une deuxième butée (22) de sorte que la première butée (12) de l'élément fileté mâle (10) est en contact avec la première extrémité saillante (36) dans la direction circonférentielle de la cage et que la deuxième butée (22) de l'élément fileté femelle (20) est en contact avec la deuxième extrémité saillante (37) dans la direction circonférentielle de la cage.

4. Dispositif de vis à rouleaux planétaires à réarmement avec cage selon la revendication 1, dans laquelle la longueur des poches de retenue des rouleaux (33) correspond à la longueur des rouleaux planétaires (31).

5. Dispositif de vis à rouleaux planétaires à réarmement avec cage selon la revendication 1, dans lequel une surface latérale de la cage est une surface en spirale.

6. Dispositif de vis à rouleaux planétaires à réarmement avec cage selon la revendication 5, dans lequel la surface latérale de la cage correspond au filetage mâle ou femelle (11, 21).

7. Dispositif de vis à rouleaux planétaires à réarmement avec cage selon la revendication 1, dans lequel ledit dispositif de vis à rouleaux planétaires à réarmement avec cage est disposé dans une vanne à bille à étanchéité forcée comprenant un siège (41) et un ensemble de bille, l'ensemble de bille comprenant une bille (43) et un élément d'étanchéité, la bille étant pourvue d'une roue d'entraînement à vis, et la roue d'entraînement à vis entraînant l'élément d'étanchéité pour le presser contre le siège (41) par l'intermédiaire du dispositif de vis à rouleaux planétaires à réarmement avec cage.

8. Dispositif de vis à rouleaux planétaires à réarmement avec cage selon la revendication 1, dans lequel ledit dispositif de vis à rouleaux planétaires à réarmement avec cage est disposé dans une vanne à bille à étanchéité forcée comprenant une bille et un premier siège et une première roue d'entraînement, la première roue d'entraînement entraînant le premier siège pour appuyer contre la bille à travers le dispositif de vis à rouleaux planétaires à réarmement avec cage.

9. Robinet à boisseau sphérique à étanchéité forcée comprenant un dispositif de vis à rouleaux planétaires à réarmement avec cage selon l'une quelconque des revendications précédentes.
